# EUROPEAN PATENT APPLICATION

(11) **EP 1 930 812 A2**
(43) Date of publication of application: **11.06.2008**
(21) Application number: 07019711.6
(22) Date of filing: 09.10.2007
(51) Int. Cl.: G06F 13/38, G06F 3/06

(54) **Data transfer control apparatus, recording medium storing data transfer control program, and data transfer control method**

(30) Priority: 08.12.2006 JP 2006332499
(71) Applicant: Fujitsu Limited, Kawasaki-shi, Kanagawa 211-8588 (JP)
(72) Inventor: Jufuku, Yoshiyuki c/o Fujitsu Kyushu Network Technologies Limited, Fukuoka-shi Fukuoka 814-8588 (JP); Furuta, Masayuki c/o Fujitsu Kyushu Network Technologies Limited, Fukuoka-shi Fukuoka 814-8588 (JP); Shimokawa, Yoshinobu c/o Fujitsu Kyushu Network Technologies Limited, Fukuoka-shi Fukuoka 814-8588 (JP)
(74) Representative: HOFFMANN EITLE

(57) **Abstract**

A buffer has a capacity of an integral multiple of the number of transferred bits (i.e., the number of data bits transferred at electrically the same timing) between the buffer and a recording medium and between the buffer and a controller. Data transfer is performed between the buffer and the recording medium and between the controller and the buffer by the number of transferred bits in parallel. The number of data outputs (inputs) at the buffer is counted. When the count reaches a number obtained by division of one sector by the number of transferred bits, the output (input) of one-sector data to the recording medium is counted. The counted number of sectors and the number of sectors input (output) from the buffer to the recording medium are compared, and it is determined whether the data transfer is performed correctly.

## Description

### BACKGROUND OF THE INVENTION

### 1. Field of the Invention

The present invention relates to a data transfer control apparatus, a recording medium storing a data transfer control program, and a data transfer control method.

### 2. Description of the Related Art

Detachable recording medium (i.e., removable medium) such as a memory card has become more frequently used as a recording medium mounted on a board of an exchanger device. Memory card is a small card-like recording medium including a read only memory (ROM) called flash memory. One example of memory cards is CompactFlash® (CF) developed by SanDisk Corporation.

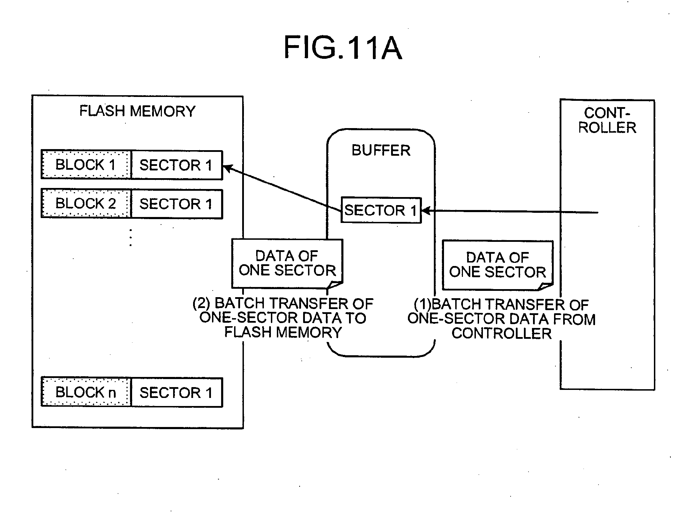

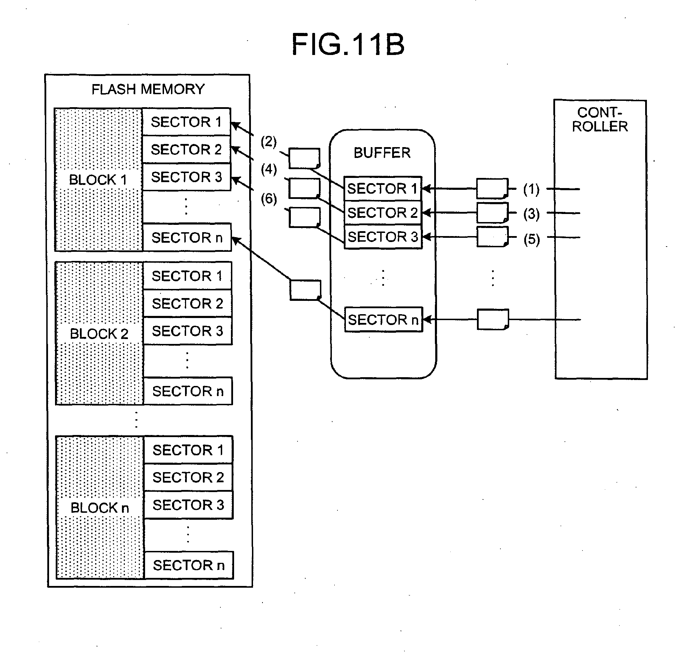

Generally, a buffer is provided between a flash memory and a controller which transfers data to and from the flash memory whereby accesses to the flash memory (i.e., performing writing process and reading process) are realized. Specifically, if one block which is employed as a unit of access to the flash memory (unit of writing process and reading process) is one sector (minimum unit of access), a buffer having a capacity of one sector is provided between the flash memory and the controller as shown in Fig. 11A. In the writing process, a data transfer control apparatus, which controls data transfer, performs batch transfer of one-sector data from the controller to the buffer. Then, the one-sector data transferred to the buffer is subjected to the batch transfer to the flash memory. On the other hand, if one block consists of plural sectors, plural buffers each having a capacity of one sector are provided, and the data transfer control apparatus sequentially performs the data transfer on one-sector basis as shown in FIG. 11B.

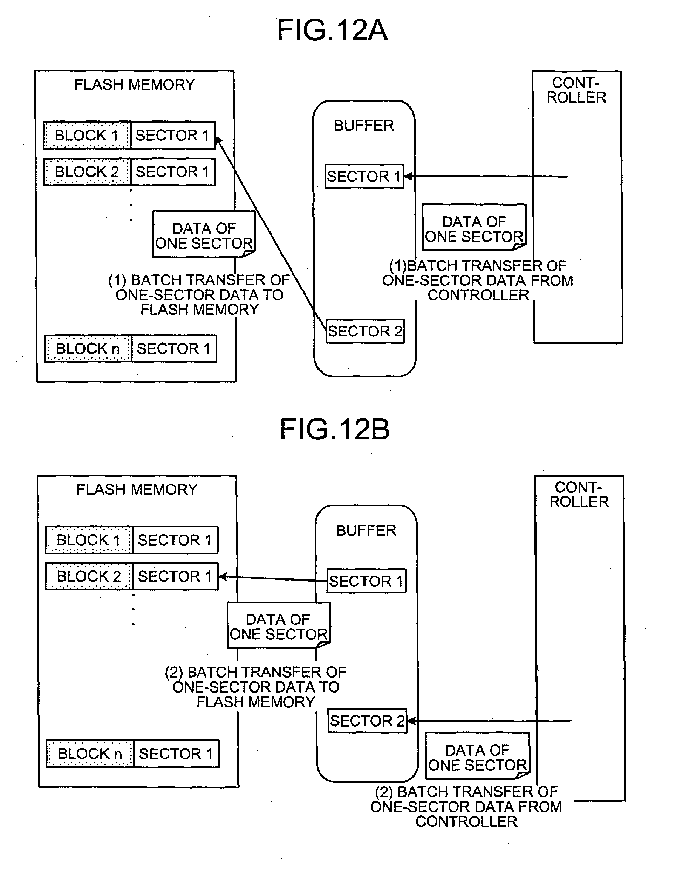

According to the technique described above, the data transfer control apparatus cannot transfer the data in the buffer to the flash memory until the transfer of one-sector data to the buffer has completed. Thus, throughput of data transfer is lowered. Further, when one block consists of plural sectors, plural buffers of one-sector capacity are required. For example, in a technique described in Japanese Patent Application Laid-Open No. 2002-288034, two buffers are provided between the flash memory and the controller as shown in Figs. 12A and 12B, and the data transfer between the controller and the buffer and the data transfer between the buffer and the flash memory are performed in parallel. Thus, the decrease in throughput of the data transfer is avoided. Further, when one block consists of plural sectors, the data transfer control apparatus counts the number of transferred sectors and thereby realizing the data transfer of plural sectors using buffers of one-sector capacity.

According to the conventional technique described above, however, it is not possible to avoid the deterioration of data transfer throughput and to suppress the buffer capacity simultaneously as describe below. According to the technique described in Japanese Patent Application Laid-Open No. 2002-288034, though the access control apparatus performs parallel data transfer using two buffers to avoid the deterioration of data transfer throughput, the buffer capacity cannot be suppressed since two buffers of one-sector capacity must be provided.

### SUMMARY OF THE INVENTION

It is an object of the present invention to at least partially solve the problems in the conventional technology.

According to one aspect of the present invention, a data transfer control apparatus that controls data transfer, includes a control unit that transfers data by a predetermined number of sectors to and from a recording medium that manages data by the predetermined number of sectors, a buffer that mediates data transfer between the control unit and the recording medium, the buffer having a capacity of an integral multiple of a number of transferred bits, the number of transferred bits indicating a number of data bits transferred between the recording medium and the buffer and between the control unit and the buffer at electrically same timing, a data transfer unit that performs data transfer between the control unit and the buffer by the number of transferred bits, and data transfer between the buffer and the recording medium by the number of transferred bits in parallel, a data counting unit that counts at least one of a number of data outputs to the recording medium at the buffer and a number of data inputs from the recording medium to the buffer, a sector counting unit that counts at least one of an output of one-sector data to the recording medium and an input of one-sector data from the recording medium when the number counted by the data counting unit indicates that a number obtained by division of one sector by the number of transferred bits is counted, and thereby counts at least one of a number of sectors output and a number of sectors input, and a determining unit that determines whether the data transfer is performed correctly or not by comparing the number of sectors counted by the sector counting unit and at least one of the number of sectors input from the buffer at the recording medium and the number of sectors output to the buffer.

According to another aspect of the present invention, a computer-readable recording medium that stores therein a computer program that causes a computer to control data transfer, the computer program causes the computer to execute transferring data by a predetermined number of sectors between a control unit and a recording medium that manages data by the predetermined number of sectors via a buffer that mediates data transfer between the control unit and the recording medium and that has a capacity of an integral multiple of a number of transferred bits, the number of transferred bits indicating a number of data bits transferred between the recording medium and the buffer and between the control unit and the buffer at electrically same timing, performing data transfer between the control unit and the buffer by the number of transferred bits, and data transfer between the buffer and the recording medium by the number of transferred bits in parallel, firstly counting at least one of a number of data outputs to the recording medium at the buffer and a number of data inputs from the recording medium to the buffer, secondly counting at least one of an output of one-sector data to the recording medium and an input of one-sector data from the recording medium when the number counted in the firstly counting indicates that a number obtained by division of one sector by the number of transferred bits is counted, thereby counting at least one of a number of sectors output and a number of sectors input, and determining whether the data transfer is performed correctly or not by comparing the number of sectors counted in the secondly counting and at least one of the number of sectors input from the buffer at the recording medium and the number of sectors output to the buffer.

According to still another aspect of the present invention, a data transfer control method includes transferring data by a predetermined number of sectors between a control unit and a recording medium that manages data by the predetermined number of sectors via a buffer that mediates data transfer between the control unit and the recording medium and that has a capacity of an integral multiple of a number of transferred bits, the number of transferred bits indicating a number of data bits transferred between the recording medium and the buffer and between the control unit and the buffer at electrically same timing, performing data transfer between the control unit and the buffer by the number of transferred bits, and data transfer between the buffer and the recording medium by the number of transferred bits in parallel, firstly counting at least one of a number of data outputs to the recording medium at the buffer and a number of data inputs from the recording medium to the buffer, secondly counting at least one of an output of one-sector data to the recording medium and an input of one-sector data from the recording medium when the number counted in the firstly counting indicates that a number obtained by division of one sector by the number of transferred bits is counted, thereby counting at least one of a number of sectors output and a number of sectors input, and determining whether the data transfer is performed correctly or not by comparing the number of sectors counted in the secondly counting and at least one of the number of sectors input from the buffer at the recording medium and the number of sectors output to the buffer.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram for explaining a gist and a feature of a data transfer control apparatus according to a first embodiment;
Fig. 2 is a block diagram of a configuration of the data transfer control apparatus according to the first embodiment;
Figs. 3A to 3H are diagrams for explaining registers;
Fig. 4 is a flowchart of a data transfer process and a counting process according to the first embodiment;
Fig. 5 is a flowchart of a determination process according to the first embodiment;
Fig. 6 is a flowchart of a selecting process according to the first embodiment;
Fig. 7 is a flowchart of a data filling process according to the first embodiment;
Fig. 8 is a flowchart of a duration-time setting process according to the first embodiment;
Fig. 9 is a flowchart of a data transfer process and a counting process according to a second embodiment;
Fig. 10 is a flowchart of a determination process according to the second embodiment;
Figs. 11A and 11B are diagrams for explaining a conventional technique; and
Figs. 12A and 12B are diagrams for explaining another conventional technique.

### DETAILED DESCRIPTION OF THE PREFERRED EMBODIMENTS

Exemplary embodiments of a data transfer control apparatus, a recording medium storing a data transfer control program, and a data transfer control method according to the present invention will be described in detail below with reference to the accompanying drawings. In the following, main terms used in the description, a gist and a feature of a data transfer control apparatus according to a first embodiment, a configuration and a processing procedure of the data transfer control apparatus according to the first embodiment, and effects of the first embodiment will be described in this order. Thereafter, other embodiments will be described.

### First Embodiment

### --Description of Terms--

Main terms used in the description of embodiments will be first described. Firstly, a "recording medium" in the following description means a recording medium mounted on a board of an exchanger, for example. A small card-like recording medium (such as a CompactFlash®) employing a read only memory (ROM) called flash memory may be an example of the recording medium. Such a "recording medium" is used to temporarily store information such as results of arithmetic processing performed by a micro processing unit (MPU). The information such as the results of arithmetic processing is subjected to "data transfer" between a "controller" and a "recording medium" mounted on the same board, whereby the information is temporarily written into the "recording medium" (writing process) and the information temporarily written into the "recording medium" is read out by the "controller" again (reading process).

Here, the "recording medium" manages data on a "sector-number basis", for example, on one-sector basis (for example, by 512 bytes), or on a plural-sector basis (for example, on two-sector basis). The "controller" transfers data of sector(s) of a number corresponding to the unit managed by the "recording medium" on performing data transfer to/from the "recording medium". Specifically, if the "recording medium" manages the data on two-sector basis, the "controller" performs data transfer of two-sector data to/from the "recording medium".

The data transfer performed between the "controller" and the "recording medium" is not realized through direct data input/output between the "controller" and the "recording medium". Data input/output speed of the "controller" is largely different from data input/output speed of the "recording medium". Therefore, a "buffer" is provided between the "controller" and the "recording medium" so that the "buffer" can absorb the difference in speed to realize the data transfer between the "controller" and the "recording medium". Thus, the data transfer is realized in two-steps, i.e., the data transfer between the "controller" and the "buffer" and the data transfer between the "buffer" and the "recording medium". A "data transfer control apparatus" must control the data transfer so that the throughput of data transfer would not be deteriorated due to the presence of the "buffer".

### --Gist and Feature of Data Transfer Control Apparatus according to First Embodiment--

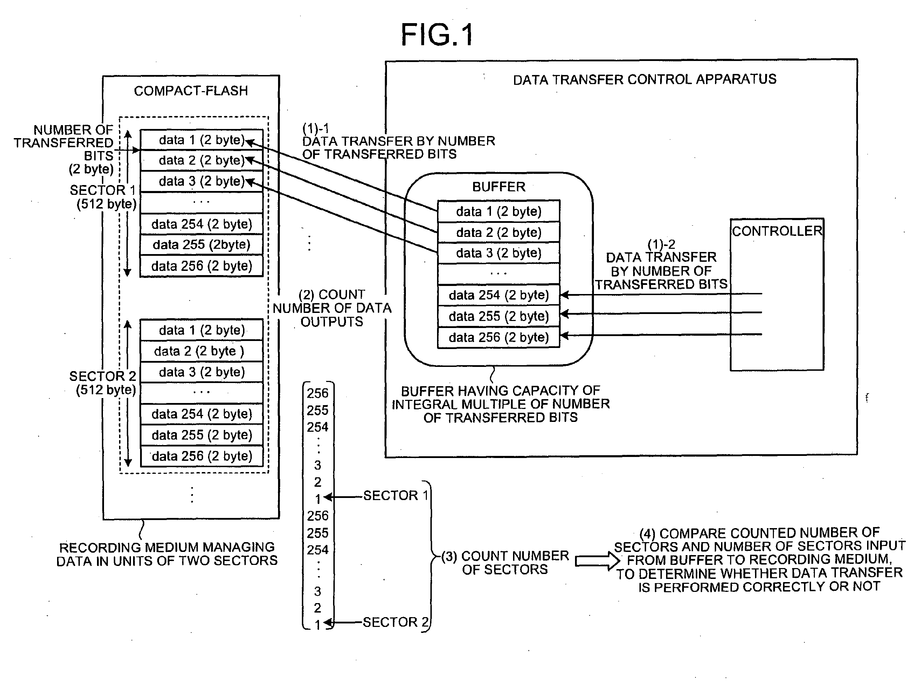

A gist and a feature of the data transfer control apparatus according to the first embodiment will be describe with reference to Fig. 1. Fig. 1 is a diagram for explaining the gist and the feature of the data transfer control apparatus according to the first embodiment.

The gist of the data transfer control apparatus according to the first embodiment lies in that a controller is provided to transfer data of a predetermine number of sectors to/from a recording medium which manages data based on a predetermined number of sectors, and that the data transfer between the controller and the recording medium via a buffer is controlled. A main feature of the data transfer control apparatus according to the first embodiment is that the buffer capacity is suppressed to a level equal to or lower than a minimum access unit, while the deterioration in throughput of data transfer is avoided.

The main feature will be briefly described. The buffer of the first embodiment has a capacity of an integral multiple of the number of transferred bits. Here, the number of transferred bits means the number of bits of data transferred between the buffer and the recording medium, or between the buffer and the controller, at the same electric timing. For example, if the width of a register, which serves as the buffer, is two bytes (i.e., 16 bits), data of two bytes (i.e., 16 bits) are transferred between the buffer and the recording medium or between the buffer and the controller at the same electric timing.

In this case, the number of transferred bits is "16 bits". The integral multiple of 16 bits is, for example, 16 bits, 32 bits, and 48 bits. In the first embodiment, it is assumed that the buffer has the capacity of an integral multiple of the number of transferred bits, which is also a capacity of one sector. One sector is assumed to be 512 bytes. Therefore, the buffer has the capacity of 256 times the number of transferred bits (16 bits) (512 bytes ÷ 2 bytes = 256 bytes). In the first embodiment, it is assumed that one sector is 512 bytes, and the buffer has a capacity of one sector (in this case, it is possible to select batch data transfer). The present invention, however, is not limited to the embodiment, and one sector and the buffer capacity can be of any size as far as the buffer has the capacity of an integral multiple of the number of transferred bits.

With the configuration as described above, the data transfer control apparatus according to the first embodiment performs data transfer between the buffer and the recording medium by the number of transferred bits (see (1)-1 of Fig. 1), and data transfer between the controller and the buffer by the number of transferred bits (see (1)-2 of Fig. 1) in parallel. In the first embodiment, writing process is described. For example, the data transfer control apparatus first transfers "data 1" of two bytes between the buffer and the recording medium, and "data 254" of two bytes between the controller and the buffer in parallel as shown in (1)-1 and (1)-2 of Fig. 1. The data transfer control apparatus then transfers "data 2" of two bytes between the buffer and the recording medium, and "data 255" of two bytes between the controller and the buffer in parallel. The data transfer control apparatus thus repeats the data transfer. Data exceeding the capacity of buffer is transferred to the buffer in a cyclic manner.

During the process, the data transfer control apparatus counts the number of data outputs at the buffer to the recording medium (see (2) of Fig. 1). For example, the data transfer control apparatus counts the number of data outputs by counting down from "256". In the first embodiment, counting is described to be realized by counting-down. The present invention, however, is not limited thereto and, for example, counting-up is applicable, and a manner of counting is not limited.

When the count of the number of data outputs becomes equal to a number obtained by division of one sector by the number of transferred bits, the data transfer control apparatus determines that one-sector data is output to the recording medium, and thus counts the number of output sectors (see (3) of Fig. 1). For example, when the counted number of data outputs is "256" (i.e., when the data transfer control apparatus counts down from "256" to "1"), since "256" is the number obtained by division of one sector (512 bytes) by the number of transferred bits (16 bits), the data transfer control apparatus counts one-sector data output to the recording medium. For example, when "256" is counted twice, the data transfer control apparatus counts "2" as the number of output sectors.

Thereafter, the data transfer control apparatus compares the counted number of sectors with the number of sectors input to the recording medium from the buffer, thereby determining whether the data transfer is performed correctly or not (see (4) of Fig. 1). For example, the data transfer control apparatus compares "2" which is the counted number of sectors with "2" which is the number of sectors input to the recording medium from the buffer, and since the two numbers match, the data transfer control apparatus determines that the data transfer is performed correctly.

Thus, the data transfer control apparatus according to the first embodiment can suppress the capacity of buffer to a level equal to or lower than the minimum access unit while avoiding the deterioration in data transfer throughput.

### --Configuration of Data Transfer Control Apparatus according to First Embodiment--

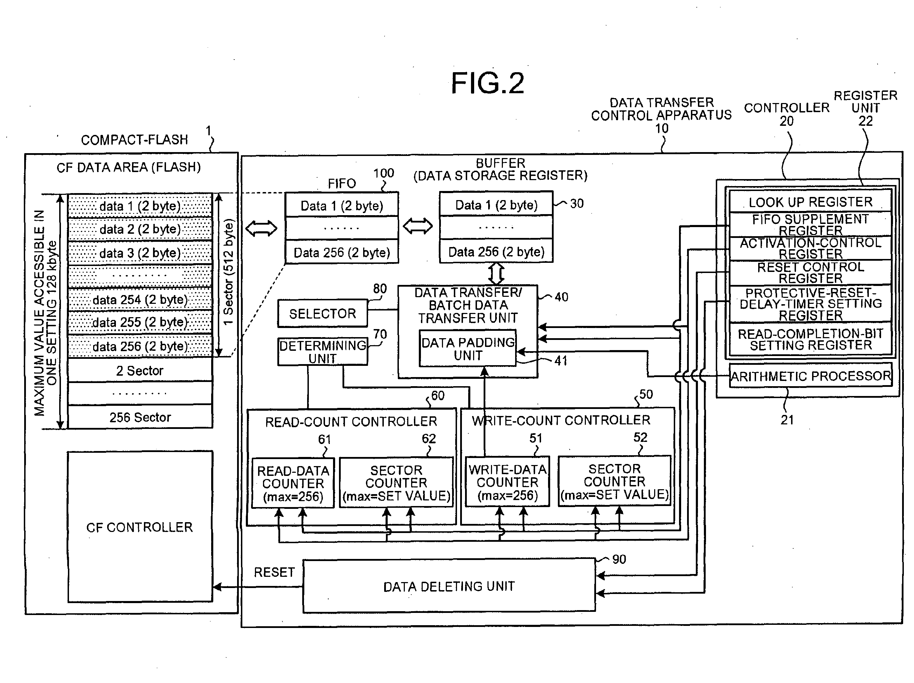

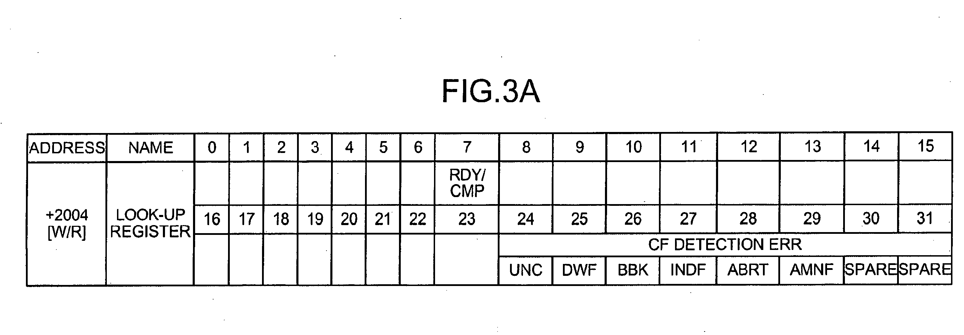

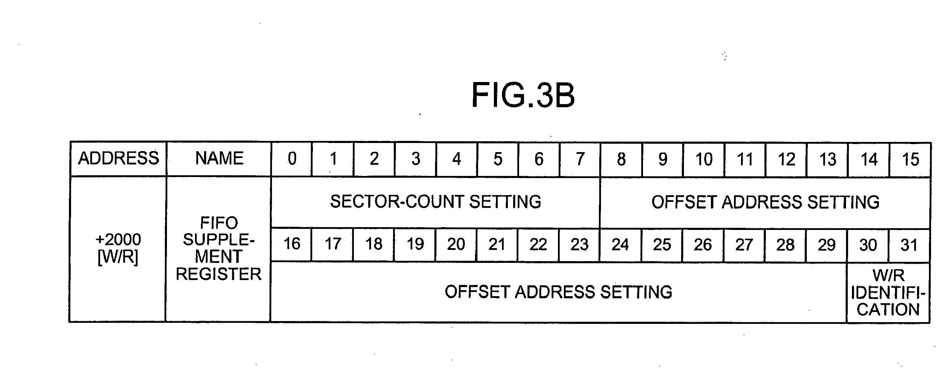

The configuration of the data transfer control apparatus according to the first embodiment will be described with reference to Figs. 2 and 3A to 3H. Fig. 2 is a block diagram of the configuration of the data transfer control apparatus according to the first embodiment. Figs. 3A to 3H are diagrams illustrating registers.

As shown in Fig. 2, a data transfer control apparatus 10 according to the first embodiment includes a controller 20 which performs data transfer to/from a CompactFlash 1, and controls data transfer performed between the controller 20 and the CompactFlash 1 via a buffer 30. In the first embodiment, the CompactFlash 1 manages data on two-sector basis. In the first embodiment, the CompactFlash is described as an example of the recording medium. The present invention, however, is not limited thereby, and can be similarly applied to a recording medium other than the CompactFlash.

The data transfer control apparatus 10 includes the controller 20, the buffer 30, a data transfer/batch data transfer unit 40, a write-count controller 50, a read-count controller 60, a determining unit 70, a selector 80, a data deleting unit 90, and a FIFO 100. The controller 20 is a micro processing unit (MPU) which transfers data of sectors of a predetermined number to/from the CompactFlash 1, and includes an arithmetic processor 21 and a register unit 22 as highly relevant elements of the present invention. The arithmetic processor 21 performs arithmetic processing, and transfers data such as results of arithmetic processing to/from the CompactFlash 1. The data transfer controlled by the data transfer control apparatus 10 is transfer of data such as results of arithmetic processing by the arithmetic processor 21 to/from the CompactFlash 1. Specifically, the arithmetic processor 21 outputs the results of arithmetic processing to the CompactFlash 1 via the data transfer/batch data transfer unit 40 and the buffer 30 described later (i.e., in writing process of the CompactFlash 1), and receives inputs of the results of arithmetic processing from the CompactFlash 1 via the buffer 30 and the data transfer/batch data transfer unit 40 (i.e., in reading process of the CompactFlash 1).

The register unit 22 is a storage element that stores a calculation and an execution state. Specifically, the register unit 22 includes various registers for respective functions as shown in Fig. 2. The registers included in the register unit 22 and the buffer 30 as a data storage register will be described with reference to Figs. 3A to 3H.

A look-up register stores information in eighth bit (7), and 25th to 32nd bits (24 to 31), for example, as shown in Fig. 3A. Among these bits, "RDY/CMP" is a bit which serves to indicate "notification of busy-cancellation" during the reading process of the CompactFlash 1, and to indicate "notification of completion of writing" during the writing process of the CompactFlash 1. Specifically, when "0" bit is set in "RDY/CMP" during the reading process, it means that the CompactFlash 1 is "busy". When "1" bit is set, it means that the CompactFlash 1 is in a state of "busy cancellation". On the other hand, when "0" bit is set during the writing process, it means that the CompactFlash 1 is "in writing". When "1" bit is set, it means that the CompactFlash 1 is in a state of "writing complete".

Next, "CF detection ERR" is a bit serves to "notify an error factor in the access to the CompactFlash detected as software". When "1" bit is set in "UNC" (25th bit), it means that "uncorrectable ECC error" is detected. When "1" bit is set in "DWF" (26th bit), it means that "defective writing in the CompactFlash card" is detected. When "1" bit is set in "BBK" (27th bit), it means that "bad block'' is detected. When "1" bit is set in "INDF" (28th bit), it means that it is detected that "accessed sector has an error or does not exist". When "1" bit is set in "ABRT" (29th bit), it means that "Aborted Command" is detected. When "1" bit is set in "AMNF" (30th bit), it means that a "general error" is detected.

A FIFO supplement register stores information in 1st to 8th bits (0 to 7), 9th to 16th bits (8 to 15), 17th to 30th bits (16 to 29), and 31st to 32nd bits (30 to 31) as shown in Fig: 3B. Among these bits, "Sector-Count" is a bit serving to set a unit of batch processing (the number of sectors managed as a unit) of the CompactFlash 1 accessed. At the maximum, a unit of 1 block (i.e., 128 Kbps) can be set. At the maximum, "00" is set. Further, "Offset Address" is a bit serving to designate an offset address of the CompactFlash addressed. The address can be designated by sector (i.e., 512 bytes). The data transfer control apparatus 10 controls on which address the writing process (or the reading process) of the CompactFlash 1 is to be performed based on the designated offset address and the number of sectors. Further, "W/R identification" is a bit serving to identify the reading process and the writing process.

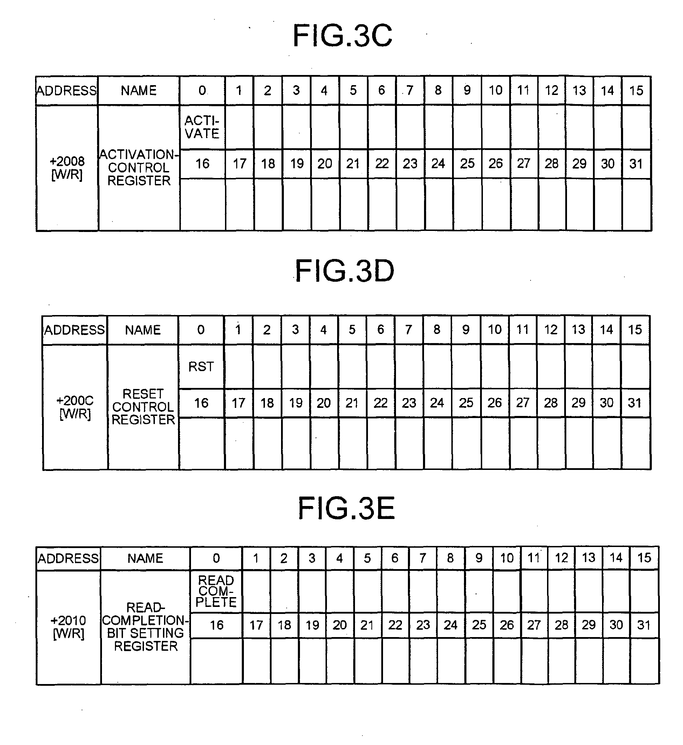

An activation-control register stores information in 1st bit (0) as shown in Fig. 3C, for example. Here, "Activation" is a bit serving to trigger the data transfer. For example, if "1" bit is set in "Activation" after the data transfer of one entire sector (512 bytes) between the controller 20 and the buffer 30, the batch data transfer unit performs data transfer. If "1" bit is set in "Activation" before the data transfer between the controller 20 and the CompactFlash 1, the data transfer unit performs data transfer.

A RESET control register stores information in 1st bit (0) as shown in Fig. 3D, for example. Here, "RST" is a bit serving to reset the CompactFlash 1 (i.e., delete the data managed in the CompactFlash 1). When "1" bit is set in the "RST" according to software control, the data deleting unit 90 resets the CompactFlash 1, whereas "0" bit is set in other times. The RESET control register and the data deleting unit 90 together serve as a data deleting unit.

A read-completion-bit setting register stores information in 1st bit (0) as shown in Fig. 3E, for example. Here, "Read Complete" is a bit serving to "notify the completion of reading". When "1" bit is set in the "Read Complete", it means that the reading process is completed, whereas "0" bit is set in other times.

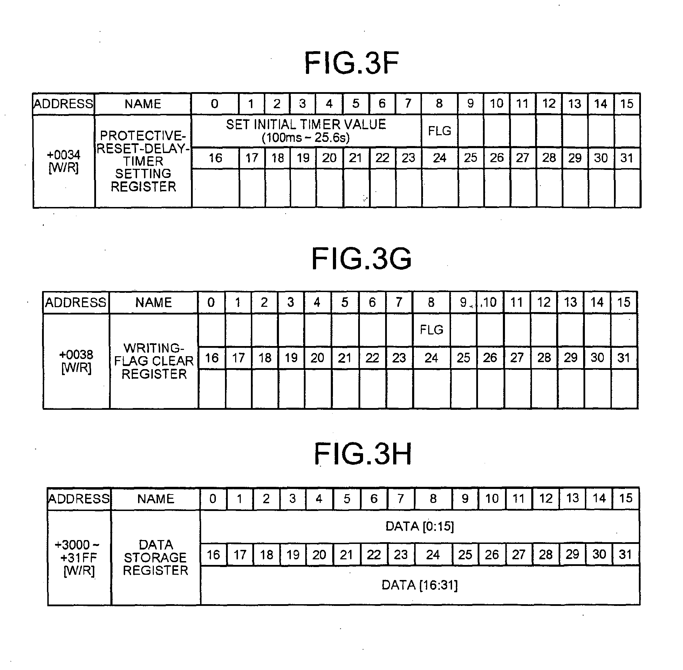

A protective-reset-delay-timer setting register stores information in 1st to 8th,bits (0 to 7) and 9th bit (8) as shown in Fig. 3F, for example. Here, "set initial timer value" is a bit serving to set a predetermined time during which the data transfer continues. In "FLG", "1" bit is set at a time of writing process. When "0" bit is set, it means that the writing is completed. At the writing process, the protective-reset-delay-timer setting register is first set, and then, information necessary for the writing process is set in the controller 20. Thereafter, the activation control register is set. Even when a reset instruction (which instructs to delete data managed in the CompactFlash 1) is received asynchronously, the data transfer is maintained during the predetermined time set in the protective-reset-delay-timer setting register. Such setting is made because the CompactFlash 1 does not guarantee performance against the resetting (or power-off) during the writing process. The protective-reset-delay-timer setting register serves as a duration-time setting unit. At a time of the writing access, it is necessary to turn "FLG" ON through software control. When the writing is completed, "FLG" is turned OFF.

A writing-flag clear register stores information in 9th bit (8) as shown in Fig. 3G, for example. Here, "FLG" is a bit serving to instruct to clear a flag for writing into the CompactFlash (writing process). When "0" bit is set in the "FLG", it is ignored, and when "1" bit is set in the "FLG", the writing flag is cleared.

Returning to Fig. 2, the buffer 30 is a storage element (i.e., data storage register) that mediates the data transfer between the controller 20 and the CompactFlash 1 (see Fig. 3H). At the time of reading, data is read by units of sectors (i.e., 512 bytes), and it is necessary to perform look-up by 512 bytes, even when "Sector Counter" is set to plural. At the time of writing, data is written by units of sectors (i.e., 512 bytes), and it is necessary to perform look-up by 512 bytes, even when "Sector Counter" is set to plural. In the first embodiment, the buffer 30 has the capacity of an integral multiple of the number of transferred bits. Here, the number of transferred bits means the number of bits of data transferred between, for example, the buffer 30 and the CompactFlash 1, or the buffer 30 and the controller 20, at electrically the same timing. Specifically, when the width of the buffer 30 (data storage register) is two bytes (i.e., 16 bits), the data of two bytes (i.e., 16 bits) is transferred at electrically the same timing between the buffer 30 and the CompactFlash 1, and between the buffer 30 and the controller 20.

In the first embodiment, the buffer 30 has the capacity of an integral multiple of the number of transferred bits, which is assumed to be a capacity of one sector. One sector is assumed to be 512 bytes. Therefore, the buffer 30 has a capacity 256 times that of the number of transferred bits (i.e., 16 bits).

The data transfer/batch data transfer unit 40 is a data transfer unit which performs data transfer between the buffer 30 and the CompactFlash 1 by the number of transferred bits, and between the controller 20 and the buffer 30 by the number of transferred bits in parallel, and a batch data transfer unit which performs data transfer, for example, by transferring one-sector data between the controller 20 and the buffer 30 after the transfer of the one-sector data between the buffer 30 and the CompactFlash 1. Specifically, the data transfer/batch data transfer unit 40 accepts a selection by the selector 80, and performs a selected data transfer (i.e., the data transfer by the data transfer unit, or the data transfer by the batch data transfer unit).

A data padding unit 41 outputs predetermined data of a sufficient amount to fill one sector to the CompactFlash 1 when the number counted by a write-data counter 51 does not reach one sector after data transferred by the data transfer unit between the controller 20 and the CompactFlash 1 comes to an end. For example, the data padding unit 41 pads (i.e., fills) with optional data such as "FF" or "00" to avoid stack of data transfer (in other words, to avoid busy state caused by the counting of the number of sectors input to the CompactFlash 1 from the buffer 30). The data transfer/batch data transfer unit 40 serves as a data transfer unit and a batch data transfer unit, and the data padding unit 41 serves as a data filling unit.

The write-count controller 50 controls the write-data counter 51 and a sector counter 52. The write-data counter 51 counts the number of data outputs at the buffer 30 to the CompactFlash 1. The sector counter 52 counts the output of one-sector data to the CompactFlash 1 when the number of outputs counted by the write-data counter 51 reaches the number obtained by division of one sector by the number of transferred bits, and thus counts the number of output sectors. The write-data counter 51 serves as a data counting unit, whereas the sector counter 52 serves as a sector counting unit.

The read-count controller 60 controls a read-data counter 61 and a sector counter 62. The read-data counter 61 counts the number of data inputs from the CompactFlash 1 to the buffer 30. The sector counter 62 counts the input of one-sector data from the CompactFlash 1 when the number of inputs counted by the read-data counter 61 reaches the number obtained by division of one sector by the number of transferred bits, and thus counts the number of input sectors. The read-data counter 61 serves as a data counting unit, whereas the sector counter 62 serves as a sector counting unit.

The determining unit 70 compares the number of sectors counted by the sector counter 51 with the number of sectors input to the CompactFlash 1 from the buffer 30 to determine whether the data transfer is performed correctly or not, and compares the number of sectors counted by the sector counter 62 with the number of sectors output from the CompactFlash 1 to the buffer 30 to determine whether the data transfer is performed correctly or not, for example. For example, the determining unit 70 compares the number of sectors counted by the sector counter 52 with the number of sectors input to the CompactFlash 1 from the buffer 30, and determines that the data transfer is performed correctly when two numbers match.

The selector 80 selects one of the data transfer by the data transfer unit and the data transfer by the batch data transfer unit at a time of data transfer. The selector 80 serves as a selecting unit.

The data deleting unit 90 receives an instruction to delete the data managed by the CompactFlash 1 and deletes the data. At a time of trouble detection, the data deleting unit 90 deletes data from the CompactFlash 1 autonomously as hardware. The RESET control register and the data deleting unit 90 together serve as a data deleting unit.

The FIFO 100 is a first-in first-out buffer. The FIFO 100 of the embodiment is provided to absorb the difference in data transfer speed, for example. Though the FIFO 100 has its own counter, its function is different from the function of the counters provided in the write-count controller 50 and the read-count controller 60 of the embodiment.

### --Process Procedure of Data Transfer Control Apparatus of First Embodiment--

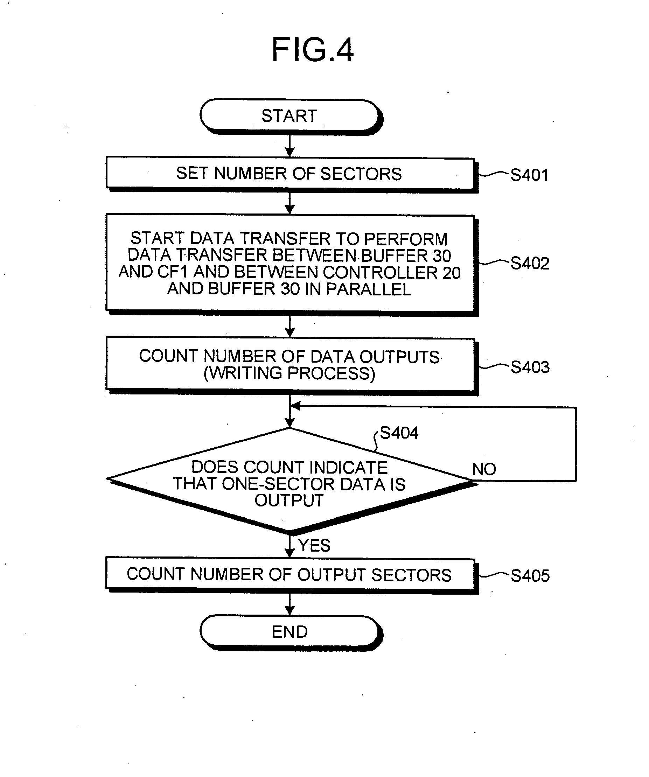

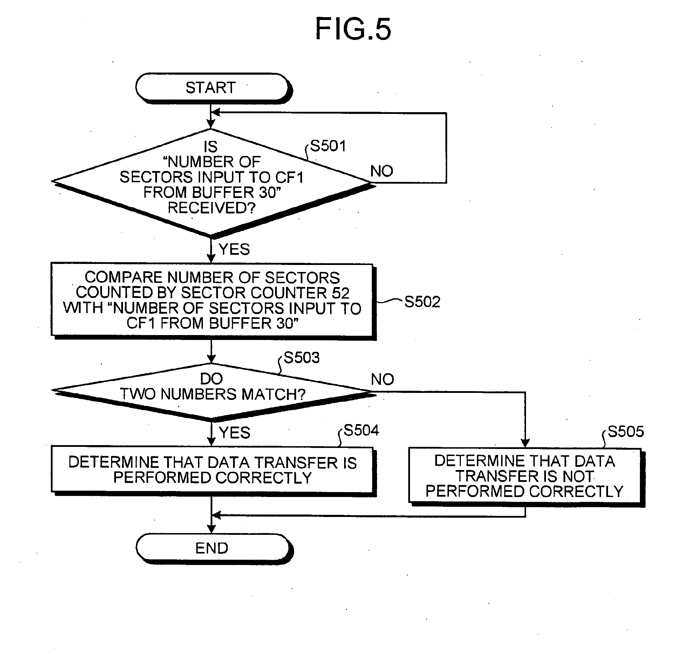

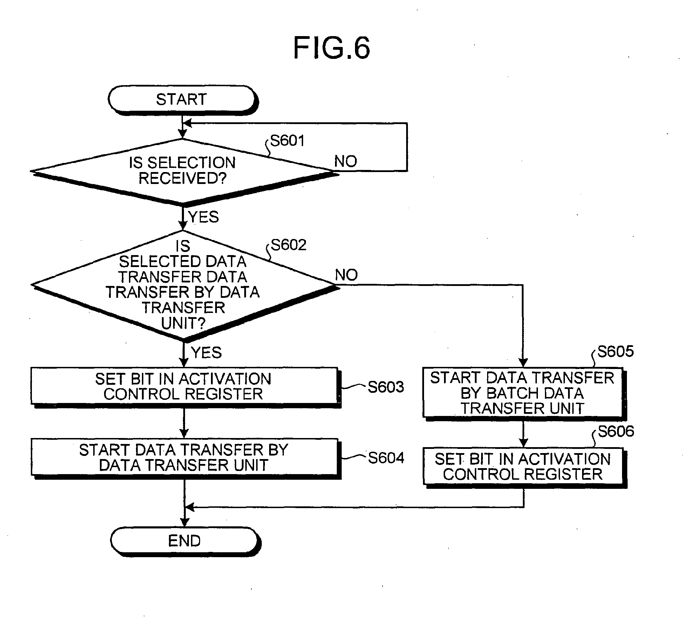

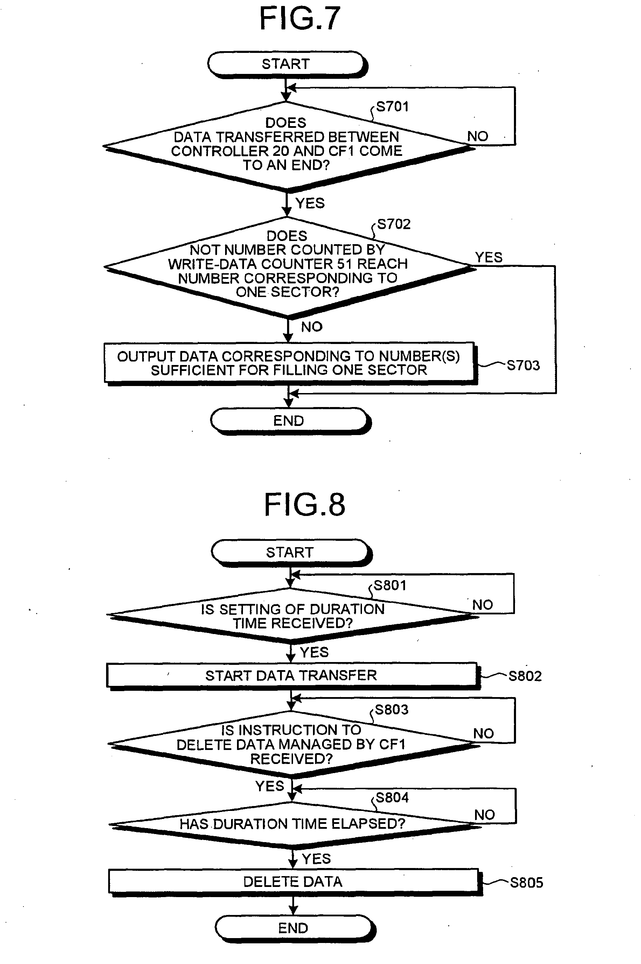

A process procedure of the data transfer control apparatus according to the first embodiment will be described with reference to Figs. 4 to 8. Fig. 4 is a flowchart of a data transfer process and a counting process according to the first embodiment; Fig. 5 is a flowchart of a determination process according to the first embodiment; Fig. 6 is a flowchart of a selecting process according to the first embodiment; Fig. 7 is a flowchart of a data filling process according to the first embodiment; and Fig. 8 is a flowchart of a duration-time setting process according to the first embodiment.

### --Data Transfer Process and Counting Process--

Firstly, the data transfer control apparatus 10 sets the number of sectors in the FIFO supplement register of the controller 20 (step S401). For example, the data transfer control apparatus 10 sets "2" as the number of sectors in the FIFO supplement register of the controller 20.

The data transfer control apparatus 10 then starts the data transfer using the data transfer unit of the data transfer/batch data transfer unit 40 (step S402). Specifically, the data transfer control apparatus 10 starts the data transfer using the data transfer/batch data transfer unit 40 between the buffer 30 and the CompactFlash 1 and between the controller 20 and the buffer 30 in parallel.

Subsequently, the data transfer control apparatus 10 counts the number of data outputs at the buffer 30 to the CompactFlash 1 using the write-data counter 51 (step S403). For example, the data transfer control apparatus 10 counts the number of data outputs by counting down from "256" using the write-data counter 51.

The data transfer control apparatus 10 determines whether the one-sector data is output to the CompactFlash 1 or not using the sector counter 52 (step 8404) . Specifically, the data transfer control apparatus 10 determines whether the number counted by the write-data counter 51 reaches the number obtained by division of one sector by the number of transferred bits (i.e., "256" in the first embodiment) or not using the sector counter 52.

When the result of determination indicates that the count does not show one-sector data output (No in step S404), the data transfer control apparatus 10 returns to the process of determining whether the one-sector data is output to the CompactFlash 1 using the sector counter 52. On the other hand, when the result of determination indicates that the count shows one-sector data output (Yes in step S404), the data transfer control apparatus 10 counts the number of output sectors using the sector counter 52 (step S405).

### --Determination Process--

Firstly, the data transfer control apparatus 10 determines whether "the number of sectors input to the CompactFlash 1 from the buffer 30" is received or not using the determining unit 70 (step S501).

When the number is not received (No in step S501), the data transfer control apparatus 10 returns to the process of determining whether the "number of sectors input to the CompactFlash 1 from the buffer 30" is received or not using the determining unit 70. On the other hand, when the number is received (Yes in step S501), the data transfer control apparatus 10 compares the number of sectors counted by the sector counter 52 and "the number of sectors input to the CompactFlash 1 from the buffer 30" using the determining unit 70 (step S502).

Subsequently, the data transfer control apparatus 10 determines whether the result of comparison indicates the match or not using the determining unit 70 (step S503). When the result shows a match (Yes in step S503), the data transfer control apparatus 10 determines that the data transfer is performed correctly using the determining unit 70 (step S504). On the other hand, when the result does not show a match (No in step S503), the data transfer control apparatus 10 determines that the data transfer is not performed correctly using the determining unit 70 (step S505).

### --Selecting Process--

Firstly, the data transfer control apparatus 10 determines whether a selection is accepted at the selector 80 or not (step S601). When the selection is not accepted (No in step S601), the data transfer control apparatus 10 returns to the process of determining whether the selection is accepted at the selector 80 or not. On the other hand, when the selection is accepted (Yes in step S601), the data transfer control apparatus 10 determines whether the selected data transfer is data transfer by the data transfer unit or not at the selector 80 (step S602).

When the result of determination indicates the data transfer by the data transfer unit (Yes in step S602), the data transfer control apparatus 10 sets a bit in the activation control register (step S603), and starts the data transfer by the data transfer unit (step S604).

On the other hand, when the result of determination does not indicate the data transfer by the data transfer unit (No in step S602), the data transfer control apparatus 10 starts the data transfer by the batch data transfer unit (step S605), and sets a bit in the activation control register (step S606).

### --Data Filling Process--

Firstly, the data transfer control apparatus 10 determines whether the data transferred between the controller 20 and the CompactFlash 1 comes to an end or not using the data padding unit 41 (step S701). When the result of determination indicates that the transferred data does not come to an end (No in step S701), the data transfer control apparatus 10 returns to the process of determining whether the data transferred between the controller 20 and the CompactFlash 1 comes to an end or not using the data padding unit 41.

On the other hand, when the result of determination indicates that the transferred data comes to an end (Yes in step S701), the data transfer control apparatus 10 determines whether the number counted by the write-data counter 51 reaches one sector or not using the data padding unit 41 (step S702).

When the result of determination indicates that the number does not reach one sector (No in step S702), the data transfer control apparatus 10 outputs data of an amount sufficient to fill one sector using the data padding unit 41 (step S703). On the other hand, when the result of determination indicates that the number reaches one sector (Yes in step S702), the data transfer control apparatus 10 ends the process by the data padding unit 41.

### --Duration-time Setting Process--

Firstly, the data transfer control apparatus 10 determines whether the protective-reset-delay-timer setting register of the controller 20 accepts a duration-time setting or not (step S801). When the duration-time setting is not accepted (No in step S801), the data transfer control apparatus 10 returns to the process at the protective-reset-delay-timer setting register of the controller 20 to accept the duration-time setting.

On the other hand, when the duration-time setting is accepted (Yes in step S801), the data transfer control apparatus 10 starts the data transfer by the data transfer/batch data transfer unit 40 (step S802).

Then, the data transfer control apparatus 10 determines whether the data deleting unit 90 accepts an instruction to delete the data managed by the CompactFlash 1 or not (step S803). When the instruction to delete the data is not accepted (No in step S803), the data transfer control apparatus 10 returns to the process of determining whether the data deleting unit 90 accepts the instruction to delete the data managed by the CompactFlash 1 or not.

On the other hand, when the instruction to delete the data is accepted (Yes in step S803), the data transfer control apparatus 10 determines whether the duration time elapses or not (step S804). When the result of determination indicates that the duration time does not elapse (No in step S804), the data transfer control apparatus 10 returns to the process of determining whether the duration time elapses or not.

On the other hand, when the result of determination indicates that the duration time elapses (Yes in step S804), the data transfer control apparatus 10 deletes the data managed by the CompactFlash 1 using the data deleting unit 90 (step S805).

### --Effect of First Embodiment--

As described above, according to the first embodiment, the data transfer control apparatus that controls data transfer, includes a control unit that transfers data by a predetermined number of sectors to and from a recording medium that manages data by the predetermined number of sectors, a buffer that mediates data transfer between the control unit and the recording medium, the buffer having a capacity of an integral multiple of a number of transferred bits, the number of transferred bits indicating a number of data bits transferred between the recording medium and the buffer and between the control unit and the buffer at electrically same timing, a data transfer unit that performs data transfer between the control unit and the buffer by the number of transferred bits, and data transfer between the buffer and the recording medium by the number of transferred bits in parallel, a data counting unit that counts at least one of a number of data outputs to the recording medium at the buffer and a number of data inputs from the recording medium to the buffer, a sector counting unit that counts at least one of an output of one-sector data to the recording medium and an input of one-sector data from the recording medium when the number counted by the data counting unit indicates that a number obtained by division of one sector by the number of transferred bits is counted, and thereby counts at least one of a number of sectors output and a number of sectors input, and a determining unit that determines whether the data transfer is performed correctly or not by comparing the number of sectors counted by the sector counting unit and at least one of the number of sectors input from the buffer at the recording medium and the number of sectors output to the buffer, whereby the capacity of the buffer can be suppressed to a level equal to or lower than the minimum access unit (i.e., one sector) while the deterioration of the data transfer throughput is avoided.

Further, according to the first embodiment, at least one of the number of data outputs from the buffer to the recording medium and the number of data inputs from the recording medium is counted, and at least one of the number of output sectors and the number of input sectors is counted, whereby the data transfer between the controller and the recording medium can be performed based on any designated number of blocks or sectors.

Further, according to the first embodiment, the buffer has the capacity of one sector, and the batch data transfer unit is provided to perform at least one of transfer of one-sector data between the recording medium and the buffer after the transfer of the one-sector data between the controller and the buffer, and transfer of one-sector data between the controller and the buffer after the one-sector data is transferred between the buffer and the recording medium. A manner of data transfer is selected from the data transfer by the data transfer unit and the data transfer by the batch data transfer unit at a time of data transfer. Therefore, it is possible to select one of the sequential data transfer (i.e., data transfer between the buffer and the recording medium by the number of transferred bits, and the data transfer between the controller and the buffer by the number of transferred bits performed in parallel), and the batch data transfer.

Further, according to the first embodiment, when the data transferred between the controller and the recording medium comes to an end, if the counted number does not reach one sector, predetermined data of an amount sufficient to fill one sector is output and/or input, whereby the busy state (stack) of the recording medium can be avoided.

Since the number of sectors input from the buffer and the number of sectors output to the buffer are counted with respect to the recording medium, if the data not reaching one sector is input or output, the recording medium might be put into a busy-state (stack). However, when the data of an amount sufficient to fill one sector is output or input (padded), the busy-state can be avoided.

Further, according to the first embodiment, units are provided, one for deleting data in response to an instruction to delete data managed by the recording medium and another for setting a predetermined time during which the data transfer continues, and when the predetermined time is set, the data transfer continues for the predetermined time even when the instruction to delete is accepted, whereby the corruption of data managed by the recording medium can be avoided at the time of writing process and the like.

### Second Embodiment

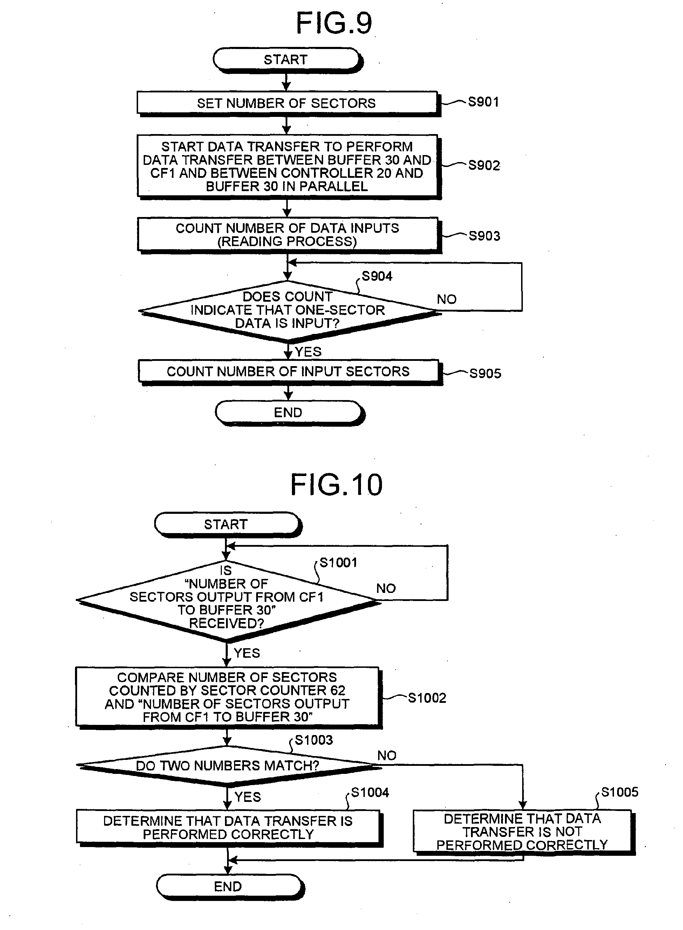

In the first embodiment, a case where the data transfer control apparatus controls the data transfer in the writing process is described. The present invention, however, is not limited thereto. The present invention is similarly applicable to a case where the data transfer control apparatus controls the data transfer in the reading process. Therefore, in a second embodiment, a case where the data transfer control apparatus controls the data transfer in the reading process will be described with reference to Figs. 9 and 10. Fig. 9 is a flowchart of a data transfer process and a counting process according to the second embodiment; and Fig. 10 is a flowchart of a determination process according to the second embodiment.

### --Data Transfer Process and Counting Process--

Firstly, the data transfer control apparatus 10, similarly to the first embodiment, sets the number of sectors in the FIFO supplement register of the controller 20 (step S901), and starts the data transfer by the data transfer unit using the data transfer/batch data transfer unit 40 (step 5902).

Then, the data transfer control apparatus 10 counts the number of data inputs from the CompactFlash 1 to the buffer 30 using the read-data counter 61 (step S903). For example, the data transfer control apparatus 10 counts the number of data inputs by counting down from "256" using the read-data counter 61.

The data transfer control apparatus 10 determines whether the data of one sector is input from the CompactFlash 1 or not using the sector counter 62 (step S904). Specifically, the data transfer control apparatus 10 determines whether the number counted by the read-data counter 61 reaches the number obtained by division of one sector by the number of transferred bits (i.e., "256" in the second embodiment) or not using the sector counter 62.

When the result of determination indicates that the count does not show that one-sector data is input (No in step S904), the data transfer control apparatus 10 returns to the process of determining whether the one-sector data is input from the CompactFlash 1 or not using the sector counter 62. On the other hand, when the result of determination indicates that the count shows that one-sector data is input (Yes in step S904), the data transfer control apparatus 10 counts the number of input sectors using the sector counter 62 (step S905).

### --Determination Process--

Firstly, the data transfer control apparatus 10 determines whether "the number of sectors output from the CompactFlash 1 to the buffer 30" is received or not using the determining unit 70 (step S1001).

When the number is not received (No in step S1001), the data transfer control apparatus 10 returns to the process of determining whether "the number of sectors output from the CompactFlash 1 to the buffer 30" is received or not using the determining unit 70. On the other hand, when the number is received (Yes in step S1001), the data transfer control apparatus 10 compares the number of sectors counted by the sector counter 62 and "the number of sectors output from the CompactFlash 1 to the buffer 30" using the determining unit 70 (step S1002).

Subsequently, the data transfer control apparatus 10 determines whether the result of comparison shows a match or not using the determining unit 70 (step S1003). When the result shows a match (Yes in step S1003), the data transfer control apparatus 10 determines that the data transfer is performed correctly using the determining unit 70 (step S1004). On the other hand, when the result does not show a match (No in step S1003), the data transfer control apparatus 10 determines that the data transfer is not performed correctly using the determining unit 70 (step S1005).

### Third Embodiment

The data transfer control apparatuses according to the first and the second embodiments are described so far. The present invention, however, can be implemented in various manners other than those described in the above embodiments. A different embodiment will be described below as a data transfer control apparatus according to a third embodiment.

The embodiments described above have a buffer having a capacity of one sector and the data transfer control apparatus has a selector to select one of the sequential data transfer and the batch data transfer. The present invention, however, is not limited thereto. The present invention is applicable to a case where the buffer has a capacity below one sector and the data transfer control apparatus does not have a selector and performs only the' sequential data transfer.

In the above embodiments, the data transfer control apparatus has a data filling unit which outputs or inputs predetermined data of an amount sufficient to fill one sector if the counted number does not reach one sector when the data transferred between the controller and the recording medium comes to an end. The present invention, however, is not limited thereto. The present invention is similarly applicable to a case where the data transfer control apparatus does not include the data filling unit. The data transfer control apparatus may take different measures to avoid the busy-state (stack) of the recording medium.

In the above embodiments, the data transfer control apparatus includes a data deleting unit and a duration-time setting unit, and continues the data transfer for the predetermined time when the predetermined time is set, even when receiving the instruction to delete (reset). The present invention, however, is not limited thereto. The present invention is similarly applicable to a case where the data transfer control apparatus does not have the data deleting unit and the duration-time setting unit. The data transfer control apparatus may take different measures to avoid the corruption of data managed in the recording medium at the time of writing process, for example.

In the above embodiments, after the data transfer of sectors of a predetermined number (for example, two sectors) have finished, "2" which is the counted number of sectors is compared with "2" which is the number of sectors input (output) to (from) the recording medium, whereby the correctness of the data transfer is determined. The present invention, however, is not limited thereto. The present invention is similarly applicable to a case where the correctness is determined for each sector (e.g., a case where the correctness of the data transfer is determined after the completion of one-sector data transfer through comparison of the number of counted sectors such as "1" and the number of sectors input to the recording medium such as "1").

### --System Configuration--

Further, in processes described in the above description of the embodiments, a part or a whole of the processes described as performed automatically may be performed manually. On the contrary, a part or a whole of the processes described as performed manually may be performed automatically in a known manner (for example, an instruction to delete the data managed by the recording medium can be periodically transmitted to the data transfer control apparatus). Further, process procedures, control processes, specific names, information including various data and parameters described in the above description and the drawings can optionally be modified if not otherwise specified.

Further, each component of each apparatus shown in the drawings is functionally conceptual, and is not necessarily configured physically as shown in the drawing (e.g., Fig. 2). In other words, a specific manner of distribution and integration of each apparatus are not limited to those shown in the drawings, and a whole or a part thereof can be configured integrally or distributively in functional terms or physical terms in any unit according to various loads and use condition. Further, any part or a whole of each process function realized in each apparatus may be realized through a CPU and a program analyzed and executed by the CPU, or may be realized in hardware implemented as a wired logic.

A data transfer control method described in the embodiments (Figs. 4 to 10) may be realized through the execution on a micro control unit. The program may be distributed through a network such as the Internet. Further, the program may be recorded on a computer-readable recording medium such as a hard disk, a flexible disk (FD), a CD-ROM, a magnetooptic disc (MO), or a digital versatile disc (DVD), and may be read out from a recording medium and executed by a computer.

According to the present invention the buffer capacity can be suppressed to a level equal to or lower than the minimum access unit while the deterioration of the data transfer throughput is avoided.

Further, according to the present invention, it is possible to select one of the sequential data transfer (i.e., data transfer between the buffer and the recording medium by the number of transferred bits and the data transfer between the controller and the buffer by the number of transferred bits performed in parallel) and the batch data transfer.

Still further, according to the present invention, the busy state (i.e., stack) of the recording medium can be avoided.

Still further, according to the present invention, it is possible to avoid corruption of data stored in the recording medium in the writing process.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A data transfer control apparatus that controls data transfer, comprising:
a control unit that transfers data by a predetermined number of sectors to and from a recording medium that manages data by the predetermined number of sectors;
a buffer that mediates data transfer between the control unit and the recording medium, the buffer having a capacity of an integral multiple of a number of transferred bits, the number of transferred bits indicating a number of data bits transferred between the recording medium and the buffer and between the control unit and the buffer at electrically same timing;
a data transfer unit that performs data transfer between the control unit and the buffer by the number of transferred bits, and data transfer between the buffer and the recording medium by the number of transferred bits in parallel;
a data counting unit that counts at least one of a number of data outputs to the recording medium at the buffer and a number of data inputs from the recording medium to the buffer;
a sector counting unit that counts at least one of an output of one-sector data to the recording medium and an input of one-sector data from the recording medium when the number counted by the data counting unit indicates that a number obtained by division of one sector by the number of transferred bits is counted, and thereby counts at least one of a number of sectors output and a number of sectors input; and
a determining unit that determines whether the data transfer is performed correctly or not by comparing the number of sectors counted by the sector counting unit and at least one of the number of sectors input from the buffer at the recording medium and the number of sectors output to the buffer.

2. The data transfer control apparatus according to claim 1, further comprising
a batch data transfer unit that performs data transfer in which one-sector data is transferred between the recording medium and the buffer after the one-sector data is transferred between the control unit and the buffer, and that performs data transfer in which one-sector data is transferred between the control unit and the buffer after the one-sector data is transferred between the buffer and the recording medium, and
a selecting unit that selects one of the data transfer by the data transfer unit and the data transfer by the batch data transfer unit on performing the data transfer.
wherein the buffer has a capacity of one sector.

3. The data transfer control apparatus according to claim 1, further comprising
a data filling unit that performs at least one of an output and an input of predetermined data of an amount sufficient to fill one sector when the number counted by the data counting unit does not reach one sector after data transferred between the control unit and the recording medium by the data transfer unit comes to an end.

4. The data transfer control apparatus according to claim 1, further comprising
a data deleting unit that deletes data managed by the recording medium on receiving an instruction to delete the data, and
a duration-time setting unit that sets a predetermined time during which the data transfer continues, wherein
the data transfer unit continues the data transfer for the predetermined time when the duration-time setting unit sets the predetermined time, even when the data deleting unit receives the instruction.

5. A computer-readable recording medium that stores therein a computer program that causes a computer to control data transfer, the computer program causes the computer to execute:
transferring data by a predetermined number of sectors between a control unit and a recording medium that manages data by the predetermined number of sectors via a buffer that mediates data transfer between the control unit and the recording medium and that has a capacity of an integral multiple of a number of transferred bits, the number of transferred bits indicating a number of data bits transferred between the recording medium and the buffer and between the control unit and the buffer at electrically same timing;
performing data transfer between the control unit and the buffer by the number of transferred bits, and data transfer between the buffer and the recording medium by the number of transferred bits in parallel;
firstly counting at least one of a number of data outputs to the recording medium at the buffer and a number of data inputs from the recording medium to the buffer;
secondly counting at least one of an output of one-sector data to the recording medium and an input of one-sector data from the recording medium when the number counted in the firstly counting indicates that a number obtained by division of one sector by the number of transferred bits is counted, thereby counting at least one of a number of sectors output and a number of sectors input; and
determining whether the data transfer is performed correctly or not by comparing the number of sectors counted in the secondly counting and at least one of the number of sectors input from the buffer at the recording medium and the number of sectors output to the buffer.

6. A data transfer control method comprising:
transferring data by a predetermined number of sectors between a control unit and a recording medium that manages data by the predetermined number of sectors via a buffer that mediates data transfer between the control unit and the recording medium and that has a capacity of an integral multiple of a number of transferred bits, the number of transferred bits indicating a number of data bits transferred between the recording medium and the buffer and between the control unit and the buffer at electrically same timing;
performing data transfer between the control unit and the buffer by the number of transferred bits, and data transfer between the buffer and the recording medium by the number of transferred bits in parallel;
firstly counting at least one of a number of data outputs to the recording medium at the buffer and a number of data inputs from the recording medium to the buffer;
secondly counting at least one of an output of one-sector data to the recording medium and an input of one-sector data from the recording medium when the number counted in the firstly counting indicates that a number obtained by division of one sector by the number of transferred bits is counted, thereby counting at least one of a number of sectors output and a number of sectors input; and
determining whether the data transfer is performed correctly or not by comparing the number of sectors counted in the secondly counting and at least one of the number of sectors input from the buffer at the recording medium and the number of sectors output to the buffer.
